# EUROPÄISCHE PATENTSCHRIFT

(11) **EP 3 695 209 B1**
(45) Veröffentlichungstag und Bekanntmachung des Hinweises auf die Patenterteilung: **17.05.2023**
(21) Anmeldenummer: 18793181.1
(22) Anmeldetag: 08.10.2018
(51) Int. Cl.: G01N 21/27, G01N 21/31, G01N 21/47, G01J 3/02, A01D 41/127, A01D 43/08, G01J 3/28, G01N 21/3563, G01N 21/359

(54) **MOBILES INHALTSSTOFFANALYSESYSTEM SOWIE VERFAHREN ZUR PROBENRICHTIGEN MESSUNG UND NUTZERFÜHRUNG MIT DIESEM**
MOBILE INGREDIENT ANALYSIS SYSTEM, AND METHOD FOR TRUE-TO-SAMPLE MEASUREMENT AND USER GUIDANCE BY MEANS OF SAME
SYSTÈME D'ANALYSE D'INGRÉDIENTS MOBILE ET PROCÉDÉ DE MESURE CORRECTE D'ÉCHANTILLONS ET GUIDE D'UTILISATION ASSOCIÉ

(30) Priorität: 11.10.2017 DE 102017123646; 16.02.2018 DE 102018103509
(43) Veröffentlichungstag der Anmeldung: 19.08.2020
(73) Patentinhaber: Carl Zeiss Spectroscopy GmbH, 07745 Jena (DE)
(72) Erfinder: GUENTHER, Ralf-Peter, 07745 Jena (DE); RODE, Michael, 07743 Jena (DE); KRAUSE, Mario, 07743 Jena (DE)
(74) Vertreter: Engel, Christoph Klaus
(86) Internationale Anmeldenummer: PCT/EP2018/077249
(87) Internationale Veröffentlichungsnummer: WO 2019/072729

(56) Entgegenhaltungen:
- EP-A2- 1 956 361
- DE-A1-102004 048 103
- US-B1- 6 360 179

## Beschreibung

Die vorliegende Erfindung betrifft ein Verfahren zur probenrichtigen Messung und Nutzerführung für ein mobiles, insbesondere ein handgehaltenes Inhaltsstoffanalysesystem sowie ein mobiles Inhaltsstoffanalysesystem auf spektroskopischer Basis. Ein bevorzugtes Anwendungsgebiet des Verfahrens ist die Inhaltsstoffanalyse von landwirtschaftlichen Erzeugnissen. Bei Getreide ist zum Beispiel zur Qualitäts- und/oder Reifegradanalyse der Feuchtegehalt, der Protein- bzw. Stärkegehalt zu erfassen. Das Verfahren kann beispielsweise bei Feldeinsätzen genutzt werden, bei denen Probenpräsentation und Probenbeleuchtung nicht exakt definierbar sind und unterschiedlich qualifizierte Nutzer als Bediener fungieren.

Die EP 1 956 361 B1 zeigt eine Messeinrichtung zur optischen und spektroskopischen Untersuchung einer Probe. Die Messeinrichtung umfasst ein Gehäuse mit einem in einer Wand des Gehäuses angebrachten Fenster. Im Gehäuse ist eine erste Lichtquelle angeordnet, deren Licht durch das Fenster auf eine außerhalb des Gehäuses angeordnete Probe fallen kann. Weiterhin befindet sich im Gehäuse ein optisches Spektrometer mit einem dispersiven Element und mehreren Detektorelementen, das von der Probe indirekt reflektiertes und durch das Fenster wieder in das Gehäuse eintretendes Licht von der ersten Lichtquelle aufnehmen kann. Im Gehäuse ist außerdem eine elektronische Kamera angeordnet, deren Einfallsöffnung durch das Fenster auf die Probe gerichtet ist. Der Kamera ist eine im Gehäuse angeordnete zweite Lichtquelle derart zugeordnet, dass Licht von der zweiten Lichtquelle durch das Fenster auf die Probe fallen kann. Die Kamera ist so positioniert, dass sie von der Probe indirekt reflektiertes Licht von der zweiten Lichtquelle, das durch das Fenster wieder in das Gehäuse eintritt, aufnehmen kann. Eine elektronische Auswerteeinheit ist mit einem Bildsensor der Kamera und den Detektorelementen verbunden. Mittels elektronischer Auswerteeinheit können neben Parametern der Probe, wie beispielsweise Stärke- und Wassergehalt, unter anderem die Länge von Partikeln der Probe und der Anteil von Verunreinigungen bestimmt werden, indem mehrere zeitlich nacheinander aufgenommene Bilder der Kamera ausgewertet werden. Die Messeinrichtung kann an eine selbstfahrende Erntemaschine angebaut werden, wobei der Probenstrom an der Messeinrichtung vorbeigeführt wird.

Die DE 11 2014 002 923 T5 beschreibt eine tragbare Feuchtigkeitsmesseinrichtung zur Bestimmung des Feuchtegehalts in biologischem Material, wie beispielsweise Tierfutter. Die Einrichtung beinhaltet ein Hauptelement, welches eine Anzeigeeinrichtung, ein Bedienungselement und eine Stromquelle aufweist, sowie eine Steuereinrichtung zum Kommunizieren mit der Anzeigeeinrichtung und dem Bedienungselement. Mit dem Hauptelement ist ein Handgriff verbunden. Ein Stab ist mit einem ersten Ende mit dem Hauptelement verbunden. Die Feuchtigkeitsmesseinrichtung umfasst weiterhin eine Sensoreinrichtung zum Messen von Feuchtigkeitswerten, welche mit einem zweiten Ende des Stabs mechanisch und mit der Steuereinrichtung elektrisch verbunden ist. Die Sensoreinrichtung beinhaltet einen Nahinfrarotsensor.

Die US 8,964,180 B2 zeigt ein tragbares und in sich geschlossenes optisches Spektrometer zur Analyse eines von einer beleuchteten Probe zurückgestreuten Lichtspektrums. Das Spektrometer ist um eine optische Achse angeordnet und umfasst einen Zielbereich, der auf die optische Achse zentriert ist, mehrere optische Sensoren, eine undurchsichtige Messkammer mit einer Öffnung, die auf die optische Achse zentriert ist und von mindestens einem Diffusionsfilter blockiert ist, und mit einem inneren Boden zur Halterung der optischen Sensoren. Eine Hauptbeleuchtungsvorrichtung dient zur Probenbeleuchtung.

Die US 2015/0021478 A1 zeigt eine zerstörungsfreie, portable Zuckergehaltsmessvorrichtung zum Messen des Zuckergehaltes von frischen Lebensmitteln, wie Früchten. Die Vorrichtung umfasst unter anderem eine LED-Lichtquelle mit kreisförmig angeordneten LEDs, welche Licht mit einer für Zucker optimierten Wellenlänge aussenden, einen Spektralsensor und einen Temperatursensor. Über eine geräteintegrierte menügeführte Nutzeroberfläche kann eine Anpassung an die jeweils zu vermessende Probe erfolgen.

Aus der US 2015/0026298 A1 ist ein Verfahren zur Auswahl der wahrscheinlichsten Variante eines passenden Kandidatenfarbstandards für die Fahrzeugreparatur beschrieben. Das Verfahren nutzt eine mobile Vorrichtung mit einer Farbanzeige und einer Eingabeeinheit, die über eine drahtlose Kommunikationsleitung an eine zentrale Datenverarbeitungseinheit angeschlossen ist. Visuelle Unterschiede zwischen einem ausgewählten Kandidatenfarbstandard und identifizierten Varianten des ausgewählten Kandidatenfarbzustandes können auf dem Display des mobilen Geräts angezeigt werden.

Die US 2015/0204833 A1 zeigt ein Verfahren und eine Vorrichtung zur feldspektroskopischen Charakterisierung von Meeresfrüchten. Ein tragbares NIR-Spektrometer ist mit einem Analysator verbunden, der für die Durchführung einer multivarianten Mustererkennungsanalyse von Reflexionsspektren konfiguriert ist, um qualitativ die wahren Identitäten oder quantitativ die Frische von Meeresfrüchten zu bestimmen.

Die WO 2008/076878 A1 beschreibt einen Messkopf für optische spektroskopische Messungen. Der Messkopf umfasst eine Beleuchtungsquelle zur Beleuchtung einer Probe, eine Sammeloptik zur Betrachtung der Probe und eine zwischen Beleuchtungsquelle und Sammeloptik angeordnete interne Referenz. Ein beweglicher Kalibrierspiegel kann zwischen einer Messposition, in welcher die Sammeloptik die Probe betrachtet, und einer Kalibrierposition, in der die Sammeloptik die interne Referenz betrachtet, verstellt werden.

Aus der WO 2014/004948 A1 ist ein Handheld-Infrarotspektroskopiegerät bekannt, welches vorzugsweise mit einem Mobiltelefon, einem Smartphone, einem Tablet, oder einem Computer verbunden sein kann. Ein flüssiger Probenport im Inneren des Gerätes ermöglicht eine Infrarot-Spektralanalyse von flüssigen Proben.

Die WO 2014/008023 A1 befasst sich mit dem Markieren von Referenzmaterialien, die für spektroskopische Suchanwendungen von Interesse sind. Eine Referenzliste von Materialien, die als Teil einer abschließenden Analyse einer spektroskopischen Analyse eines Probenmaterials zu betrachten sind, wird erzeugt. Eine Beobachtungsliste von mindestens einem Material, das für eine abschließende Analyse der spektroskopischen Analyse eines Probenmaterials beibehalten werden soll, wird bereitgestellt. Es erfolgt eine abschließende Analyse des Probenmaterials unter Verwendung der Beobachtungsliste des mindestens einen Materials und der Referenzliste von Materialien. Anschließend wird bestimmt, ob ein Spektrum des Probenmaterials mit mindestens einem Materialspektrum auf der Beobachtungsliste und auf der Referenzliste übereinstimmt.

Die WO 2015/101992 A2 beinhaltet ein Hand-Spektrometer, welches mit einer Datenbank mit spektraler Information koppelbar ist, um Attribute eines Objekts zu bestimmen. Das Spektrometer kann mit einer portablen Kommunikationsvorrichtung gekoppelt sein, mittels welcher der Benutzer Daten, die sich auf das Messobjekt beziehen, eingeben und empfangen kann.

Die US 2004/169857 A1 zeigt eine keramische Referenz und ein Verfahren zum Erzeugen eines Referenzsignals mit folgenden Schritten: Bereitstellen eines Spektrometers mit einer Quelle, die einfallende Photonen emittiert. Bereitstellen eines keramischen Elements mit einer einfallenden Oberfläche und einem inneren Streukörper. Leiten wenigstens eines Teils der einfallenden Photonen zu der einfallenden Oberfläche. Streuen des genannten Teils der einfallenden Photonen durch die Keramik. Erfassen mindestens eines Teils der gestreuten Photonen, wobei das Referenzsignal erzeugt wird.

Die EP 1 740 928 B1 beinhaltet ein Verfahren zur Rekalibrierung eines spektrometrischen Messkopfes, welches interne und externe Referenzierungen nutzt, die in den Strahlengang des Messkopfes geschwenkt werden können.

Die bislang bekannten mobilen Inhaltsstoffanalysesysteme sind in der Regel einfach aufgebaut und haben den Nachteil, dass die erforderliche Messgenauigkeit für Feuchtigkeit und Inhaltsstoffe, wie beispielsweise Protein und Stärke, aufgrund der Freiheitsgrade bei der Messung nicht sichergestellt werden kann. Neben der Probenpräsentation gibt es weitere Einflussfaktoren auf die Messgenauigkeit, die zum Beispiel von der Beleuchtung, der Lage und Struktur der Probe abhängig sind. So sind die Mindestanforderungen an eine Feuchtigkeitsmessung eine Standardabweichung von <0,4%, bei Protein <0,3% und Stärke <0,5%. Erstellte Kalibrationen haben eine unterschiedliche Robustheit gegenüber Probentoleranzen und Umweltbedingungen. Wenn mehrjährige Daten über die zu messende Probe vorliegen, sollte die Kalibration eine gewisse Robustheit bzw. einen Vertrauensbereich haben. Bei Annäherung an die Grenze des Vertrauensbereichs könnte es jedoch sinnvoll sein, eine Warnung an den Nutzer auszugeben. Unterschiedliche relative Luftfeuchten während der Probenmessung können ebenfalls Einfluss auf das Messergebnis haben.

Die DE 10 2004 048 103 A1 zeigt eine Anordnung zur Bestimmung der Bestandteile geernteter landwirtschaftlicher Produkte. Die Messungen sind statisch oder an einem Materialstrom möglich. Ein spektrometrischer Messkopf besteht aus einem mit einem Fenster versehenen Gehäuse, in dem eine Beleuchtungsquelle, eine Spektrometeranordnung und mindestens zwei Standards zur internen Rekalibrierung vorhanden sind. Die Standards können so in den Strahlengang des Messkopfes geschwenkt werden, dass das gesamte von der Beleuchtungsquelle ausgehende Messlicht zur Rekalibrierung verwendet wird. Außerdem sind ein Prozessor zur Erfassung und Bearbeitung der Messwerte und eine Schnittstelle zu einem Bussystem vorgesehen. Der Messkopf ist für die Anwendung im NIR-Bereich vorgesehen, um beispielsweise den Feuchtegehalt und den Gehalt an Fett, Stärke, Eiweiß und dgl. zu bestimmen.

Die US 6,360,179 B1 betrifft die Kommunikation mit entfernten Erntesensoren und die Überprüfung der von diesen übertragenen Daten. Kalibrierungsdaten werden direkt zu einem entfernten Erntesensor übertragen, um diesen zu kalibrieren, sodass mit diesem Erntesensor eine genaue Erfassung von Erntemerkmalen möglich sein soll. Zudem ist eine Überprüfung eines Ausgangssignals des Erntesensors vorgesehen.

Die Aufgabe der vorliegenden Erfindung besteht ausgehend vom Stand der Technik darin, ein Verfahren zur probenrichtigen Messung und Nutzerführung für ein mobiles Inhaltsstoffanalysesystem zur Verfügung zu stellen, welches eine reproduzierbare Inhaltsstoffmessung insbesondere bei Feldeinsätzen durch unterschiedlich qualifizierte Nutzer ermöglicht. Das Verfahren soll automatisch und ohne subjektive bzw. wertende Einflussnahme des Nutzers immer eine verlässliche Inhaltsstoffanalyse ermöglichen. Weiterhin soll ein mobiles Inhaltsstoffanalysesystem zur Durchführung dieses Verfahrens bereitgestellt werden.

Zur Lösung der Aufgabe dienen ein Verfahren gemäß Anspruch 1, ein mobiles Inhaltsstoffanalysesystem gemäß Anspruch 8 sowie ein Datenverarbeitungsprogramm gemäß Anspruch 10.

Das erfindungsgemäße Verfahren, welches in Anspruch 1 definiert ist, steuert ein mobiles Inhaltsstoffanalysesystem, welches ein Gehäuse mit einem Fenster umfasst. Innerhalb des Gehäuses sind eine Lichtquelle, ein optisches Spektrometer, eine Kamera, eine interne Referenzeinheit zur Referenzierung und eine elektronische Rechen- oder Steuereinheit angeordnet. Die Komponenten werden durch die Steuereinheit gesteuert, welche beispielsweise durch einen Mikroprozessor gebildet ist. Durch das Fenster des Gehäuses wird Licht von der Lichtquelle in Richtung einer zu untersuchenden Probe ausgestrahlt. Das optische Spektrometer umfasst

vorzugsweise ein dispersives Element und mehrere Spektralsensoren, welche das von der Probe reflektierte Licht aufnehmen können. Die Einfallsöffnung der Kamera ist durch das Fenster ebenfalls auf die Probe gerichtet. Der Kamera ist vorzugsweise eine zweite Lichtquelle, beispielsweise in Form einer Weißlicht-LED, zugeordnet, welche Licht durch das Fenster auf die Probe aussendet. Das von der Probe reflektierte Licht der zweiten Lichtquelle wird durch die Kamera erfasst. Das Inhaltsstoffanalysesystem umfasst für externe Referenzierung weiterhin eine Schnittstelle zum Anschluss an eine externe Referenzeinheit sowie eine Anzeige- und Bedieneinheit zur Interaktion mit einem Nutzer. Die Anzeige- und Bedieneinheit umfasst zur intuitiven Interaktion mit einem Nutzer vorzugsweise eine graphische Bedienoberfläche (GUI - Graphical User Interface) mit guter Auflösung. Somit sind auch Probenbilder in guter Qualität darstellbar. Es können aber auch einfache Displays bzw. multifunktionale Bedienelemente zum Einsatz kommen. Vorteilhaft ist bei solchen Systemen eine interne Speichermöglichkeit für die Datensätze inklusive der Probenbilder, die später ausgelesen werden können und für die Erstellung von Protokollen der Messungen und Messreihen Verwendung finden können. Wesentlich hierbei ist, dass neben dem Messwert des Inhaltsstoffes auch eine Gültigkeitsaussage angezeigt werden kann. Darüber hinaus können weitere Bedien- und Anzeigeelemente, wie Bedienfelder, Bedienknöpfe und Bedientaster sowie optische oder akustische Anzeigeelemente vorhanden sein. Das Inhaltsstoffanalysesystem kann weiterhin eine Schnittstelle, wie beispielsweise USB,

Bluetooth^{®}, Wi-Fi^{®}, o. ä. Schnittstellen, zur Dateneingabe und Datenausgabe enthalten. Über die Schnittstelle können Softwareupdates für die Steuereinheit, Updates für die Kalibrationsprodukte oder neue Kalibrationsprodukte eingespielt werden. Außerdem wird das Abspeichern von Messdaten auf externe Datenträger und deren Ausgabe auf einen Drucker ermöglicht.

Das von dem Inhaltsstoffanalysesystem ausgeführte Verfahren umfasst folgende Schritte: In einem ersten Schritt wird ein für die vorliegende, zu untersuchende Probe geeignetes Kalibrationsprodukt ausgewählt, vorzugsweise automatisch anhand eines aufgenommenen Bildes oder indem ein Nutzer an der Anzeige- und Bedieneinheit eine Eingabe tätigt oder eine automatische Vorauswahl bestätigt. Ein Kalibrationsprodukt im Sinne der Erfindung ist ein in einem Speicher der elektronischen Steuereinheit hinterlegtes Mess- und Auswerteregime, welches anhand eines ebenfalls in dem Speicher hinterlegtem Kalibrationsmodells und weiterer in dem Speicher enthaltener Abläufe zur probenrichtigen Messwertaufnahme, wie beispielsweise Messpunkte, Messdauer, Referenzierung, aus den mittels Spektrometer erfassten Reflexionsspektren einen oder mehrere Inhaltsstoffe der untersuchten Probe berechnet.

In einem weiteren Verfahrensschritt erfolgt eine automatische Plausibilitätsprüfung des gewählten Kalibrationsproduktes. Falls das gewählte Kalibrationsprodukt innerhalb vorbestimmter Toleranzbereiche nicht zu der Probe passt, wird dies dem Nutzer auf der Anzeige- und Bedieneinheit signalisiert. Vorzugsweise erfasst die Kamera dazu ein Bild der Probe und eine Bilderkennungsroutine vergleicht dieses mit hinterlegten Bildern. Bei Bedarf wird der Nutzer aufgefordert, ein alternatives Kalibrationsprodukt auszuwählen, welches wiederum einer Plausibilitätsprüfung unterzogen wird. Alternativ kann automatisch ein anderes Kalibrationsprodukt gewählt werden. Die vorgenannten Schritte werden solange ausgeführt bis die Plausibilitätsprüfung des Kalibrationsproduktes zu einem positiven Ergebnis führt oder nach einer vorbestimmten Versuchsanzahl das Verfahren komplett abgebrochen werden muss, wenn sich kein passendes Kalibrationsprodukt findet. Auf diese Weise können Messfehler durch fehlerhaft ausgewählte Kalibrationsprodukte eliminiert werden. In dem Fall, dass sich kein passendes Kalibrationsprodukt findet, besteht vorzugsweise die Möglichkeit einer automatischen oder nutzergeführten Erstellung eines neuen Kalibrationsproduktes.

Im nächsten Schritt folgt eine automatische und/oder nutzergeführte Erfassung von Messwerten mithilfe des optischen Spektrometers. Hierzu werden dem Nutzer an das gewählte oder automatisch bestimmte Kalibrationsprodukt angepasste Messbedingungen ausgegeben bzw. angezeigt, also Informationen zur Verfügung gestellt, die zumindest den zu wählenden Messpunkt und die Messdauer umfassen. Dem Nutzer wird beispielsweise über die Anzeigeeinheit signalisiert, wie lange die Messsequenz andauert. Somit weiß der Nutzer, wie lange er das Inhaltsstoffanalysesystem ruhig und mit sicherem und gleichbleibendem Probenkontakt halten muss, um eine optimale Messung durchführen zu können. Durch das zuvor ausgewählte Kalibrationsprodukt wird vorzugsweise vorgegeben, ob Einzelmessungen oder zyklische Messungen vorzunehmen sind. Die Anzahl der Einzelmessungen ist vorzugsweise ebenfalls mit Bezug auf das Kalibrationsprodukt festgelegt. Bei den Einzelmessungen wird dem Nutzer bevorzugt signalisiert, wann er den Messort ändern und eine weitere Einzelmessung vornehmen soll. Der Nutzer wird vorzugsweise während der Messwertaufnahme durch optische Signale, wie beispielsweise LED-Anzeigen, bzw. durch akustische Signale geführt. Es erfolgt somit eine Aufnahme von Messwerten unter den zuvor bestimmten Messbedingungen.

Die erfassten Messwerte werden anschließend durch die elektronische Steuereinheit verarbeitet, wobei jeder Messwert anhand abgespeicherter Vergleichswerte einer Plausibilitätsprüfung unterzogen wird. Die Plausibilitätsprüfung umfasst dabei mindestens die Prüfung, ob der jeweilige Messwert unter den festgelegten und zuvor ausgegebenen Messbedingungen aufgezeichnet wurde. Dazu werden die Messbedingungen während der Messwertaufnahme überwacht. Die Plausibilitätsprüfung kann außerdem den Vergleich mit Toleranzbereichen bzw. zu erwartenden Werten und ggf. weitere Prüfungen umfassen. Messwerte, welche diese Plausibilitätsprüfung nicht bestehen, werden als ungültig markiert.

Abschließend erfolgt eine Ausgabe zumindest der als gültig markierten Messwerte, ggf. auch aller erfassten Messwerte auf der Anzeige- und Bedieneinheit, an einen Datenträger, einen Drucker oder eine andere Ausgabeeinheit. Hierbei wird für jeden Messwert eine Gültigkeitsaussage ausgegeben oder in Form eines Filters angewandt. Bei Warnungen, beispielsweise aufgrund zu hoher Abweichungen zwischen den Einzelmessungen, kann vollautomatisch entschieden werden, ob bestimmte Einzelmessungen nicht in die Berechnung einbezogen werden sollen. In abgewandelten Ausführungen kann diese Entscheidung auch dem Nutzer überlassen werden. In der Konfiguration des Kalibrationsproduktes ist vorzugsweise einstellbar, ob fehlerhafte Einzelmessungen manuell, halbautomatisch oder vollautomatisch zu eliminieren sind.

Ein wesentlicher Vorteil des erfindungsgemäßen Verfahrens besteht darin, dass durch den automatisierten Ablauf, ggf. unterstützt durch die integrierte Nutzerführung, und durch die Plausibilitätsprüfung ein hohes Maß an Reproduzierbarkeit von manuellen Messungen erreicht werden kann. Auf diese Weise können insbesondere auch im Feldeinsatz reproduzierbare Inhaltsstoff-Messwerte zur Verfügung gestellt werden. Messfehler und unerwünschte Einflüsse auf das Messergebnis können weitestgehend ausgeschlossen werden. Die Nutzerführung ermöglicht eine optimale Messwertaufnahme sowohl für geschulte Kalibrateure, Futtermittelberater als auch Arbeiter in der Logistik oder Bauern vor Ort. Reproduzierbare Messwerte besitzen im Bereich landwirtschaftlicher Produkte einen hohen Stellenwert, da die Messwerte in der Regel Folgeprozesse beeinflussen, wie zum Beispiel eine Wareneingangsprüfung mit Zusicherung bestimmter Qualitätsmerkmale, welche auch monetäre Auswirkungen haben können.

Gemäß einer vorteilhaften Ausführungsform erfolgt vor der Messwertaufnahme eine interne Kalibrierung des Inhaltsstoffanalysesystems mit Hilfe der internen Referenzeinheit. Zur Kalibrierung des Inhaltsstoffanalysesystems vor dessen Inbetriebnahme bzw. in bestimmten Zeitabständen dient bevorzugt eine externe Referenzierung, wofür die Schnittstelle zu einer externen Referenzeinheit vorgesehen ist. Für Details im Zusammenhang mit der Kalibrierung wird auf das oben genannte Patent EP 1 740 928 B1 der Anmelderin verwiesen. Die interne und die externe Referenzierung umfassen vorzugsweise Schwarz- und Weißstandards, die durch zusätzliche anwendungsspezifische interne Standards für weitergehende Kalibrierungen ergänzt werden können. Die Standards werden vorzugsweise automatisch gesteuert. Eine manuelle Steuerung ist aber ebenso möglich. Die interne und die externe Referenzierung ermöglichen eine automatische Systemüberwachung, eine Überwachung des Fensters auf Beschädigung oder Verschmutzung sowie die Möglichkeit unterschiedliches Fenstermaterial bzw. Probenbehälter (Petrischale, Messbecher, Flansche) zu verwenden, ohne dass die existierenden Kalibrationen verändert oder angepasst werden müssen. Nach Erfassung der Messdaten mit der internen Referenzierung durch das Spektrometer erfolgt anschließend unter Nutzung der Messwerte der Kalibrierung des Inhaltsstoffanalysesystems vor der Inbetriebnahme eine interne Kalibrierung des Inhaltsstoffanalysesystems. Das Inhaltsstoffanalysesystem ist nun für die nächste Messung der Probe bereit.

Für die Plausibilitätsprüfung des Kalibrationsproduktes bzw. bei der Plausibilitätsprüfung der erfassten Messwerte können vorzugsweise von der Kamera aufgenommene Bilder der Probe sowie für das gewählte Kalibrationsprodukt in einem Speicher der elektronischen Recheneinheit für das ausgewählte Kalibrationsprodukt abgelegte Vergleichsbilder genutzt werden. Die elektronische Steuereinheit vergleicht die aufgenommenen Bilder der Probe z. B. mittels einer Bilderkennungssoftware mit den abgelegten Vergleichsbildern. Abhängig von der Analyse des Probenbildes werden nachfolgend genannte Werte erhoben sowie die gelisteten Ereignisse ausgelöst:
a) Das Probenbild ist in sich homogen und hat eine gleichverteilte Helligkeit. Es liegt eine Referenzmessung mit einem externen Wellenlängenstandard vor.
   - Spektrometer Vollaussteuerung bei einer Wellenlänge von ca. 1200 nm (Peak der Halogenlampe) bedeutet eine Referenzierung mit einem externen Weiß-Standard, wenn der Spektrenverlauf stetig ist (keine Peaks). Die Vollaussteuerung erfolgt bei minimaler möglicher Integrationszeit (gespeichert bei Werksabnahme). Ist kein stetiger Spektrenverlauf erkennbar und liegen Peaks/Einbrüche/charakteristische Banden an gespeicherten Stellen des Spektrums vor, handelt es sich um eine Messung mit einem externen Wellenlängenstandard.
   - Spektrometer Vollaussteuerung mit minimaler Integrationszeit multipliziert mit einem festen Faktor x in % bei einer Wellenlänge von ca. 1200 nm bedeutet eine Messung mit einem Graustandardsatz zur Überprüfung der Linearität des Messsystems.
   - Spektrometeraussteuerung unter einem Mindestwert -> ungenügende Reflexion -> keine Probe - ungültige Messung
b) Das Probenbild liefert eine ungleiche Helligkeitsverteilung bei bereichsweiser Verteilung.
   - keine vollständige Bedeckung des Messfensters mit Probenmaterial -> Messwert ungültig oder Warnung
c) Das Probenbild liefert eine ungleiche Helligkeitsverteilung bei homogener Verteilung von Hell/Dunkel-Bereichen.
   - Beurteilung der Probenverdichtung -> Probenverdichtung ungenügend (bei Körnerproben) -> Messung ungültig
   - Beurteilung Struktur und Körnigkeit der Probe, beispielsweise grobkörnig bei Mais oder kleinkörnig bei Weizen -> passend zum ausgewählten Kalibrationsprodukt, Messwert gültig oder Warnung

Zur Bewertung der Probenverdichtung erfolgt vorzugsweise ein Abgleich mit zu den einzelnen Kalibrationsprodukten gespeicherten Referenzbildern, um bei ungenügender Probenverdichtung eine Warnung bzw. Ungültigkeit der Messung auszugeben.

Für die Plausibilitätsprüfung des Kalibrationsproduktes bzw. bei der Plausibilitätsprüfung der erfassten Messwerte kann alternativ auch eine Fotodiode zum Einsatz kommen, welche das visuelle Reflexionsspektrum der Probe integral bewertet und eine Aussage zur Güte der Messung geben kann.

Weiterhin kann mit Hilfe der von der Kamera aufgenommenen Probenbilder überprüft werden, ob bei an unterschiedlichen Messorten vorzunehmenden Einzelmessungen auch an unterschiedlichen Messorten gemessen wurde. Hierfür wird mittels der Kamera ein Bild von dem jeweiligen Messort aufgenommen. Nachfolgend werden die aufgenommen Messortbilder mittels der Bilderkennungssoftware verglichen, um unterschiedliche Messorte zu identifizieren.

Durch die von der Kamera aufgenommenen Bilder der Probe kann unter anderem auch überprüft werden, ob ein optimaler Messabstand eingehalten wurde oder ob durch das Inhaltsstoffanalysesystem während der Messung ein optimaler Anpressdruck auf die Probe ausgeübt wurde. Die Vorgaben für den Messabstand und den Anpressdruck sind in Bezug auf das passend gewählte Kalibrationsprodukt abgespeichert.

Als zweckmäßig hat es sich erwiesen, für die Plausibilitätsprüfung die Daten eines in das Inhaltsstoffanalysesystems integrierten Lagesensors zu nutzen. Der Lagesensor kann zum Beispiel ein 3-Achsensensor, Beschleunigungssensor, Gravitationssensor oder Gyrosensor sein. Die verfahrensgemäß genutzte Lichtquelle ist vorzugsweise als breitbandige thermische Beleuchtung, wie beispielsweise als IR-Strahler oder Halogenlampe ausgebildet. Von derartigen Lichtquellen ist bekannt, dass sie nur selten homogen abstrahlen und der Schwerpunkt des Lichtaustritts an ihrer Wendel wandern kann oder sich bei jedem Einschaltvorgang an einem anderen Punkt der Wendel ausbilden kann. Beim Messen mit einem mobilen Inhaltsstoffanalysesystem ist der Nutzer frei, in welcher Orientierungslage im Raum er die Messung durchführt. Hierbei hat es sich als sinnvoll erwiesen, wenn die interne Kalibrierung in der gleichen Lage erfolgt, wie die Probenmessung. Durch den Lagesensor wird die Lage des Inhaltsstoffanalysesystems in Bezug zu dem Messort während der internen Kalibrierung und der eigentlichen Messwertaufnahme erfasst. Die interne Kalibrierung wird nur dann als gültig angesehen, wenn sich die Orientierung / Lage während Messung und interner Kalibrierung übereinstimmen, andernfalls wird eine neue interne Kalibrierung angefordert bzw. automatisch ausgeführt. In dem Fall, dass es Korrekturdaten bezüglich der Beleuchtung zur Orientierung / Lage im Raum des Inhaltsstoffanalysesystems gibt, werden diese lageabhängig eingerechnet.

Als vorteilhaft hat es sich erwiesen, wenn Erschütterungen des Inhaltsstoffanalysesystems zumindest während der Messwertaufnahme erfasst werden. Hierfür ist das Inhaltsstoffanalysesystemsystem vorzugsweise mit einem Schocksensor ausgestattet. Die Positioniergenauigkeit der für die interne Kalibrierung verwendeten Standards hat einen hohen Einfluss auf die Messgenauigkeit. In dem Fall, dass der Schocksensor während der Messsequenz eine Erschütterung bzw. einen Stoß erfasst, wird die Messung vorzugsweise automatisch verworfen und eine neue interne Kalibrierung und Messung ausgelöst.

Bei mobilen Messgeräten ist die Gefahr von Stürzen durch Fallenlassen, Umkippen oder raues Ablegen, sowie Schockrisiken durch Transport stets präsent. Beim Spektrometer ist die werksseitige Kalibrierung der Wellenlängenrichtigkeit <1nm von entscheidender Bedeutung für die Vertrauenswürdigkeit der Messwerte und damit für die Inhaltsstoffberechnung zu den untersuchten Proben. Der genannte Schocksensor registriert im Betrieb, d. h. bei angeschaltetem Inhaltsstoffanalysesystem, starke Erschütterungen und weist den Nutzer auf eine Überprüfung der Wellenlängenrichtigkeit hin. Das kann beispielsweise durch eine Prüfung gegen den externen Wellenlängenstandard und mittels gespeicherter Referenzwerte erfolgen. In diesem Zusammenhang wird auf die DE 10 2007 029 405 A1 verwiesen, in welcher ein Wellenlängen- und Intensitätsstandard für Spektrometer beschrieben sind. Werden Abweichungen festgestellt, die einen Vertrauensbereich überschreiten, wird dem Nutzer empfohlen, das Gerät zur Rekalibrierung an den Hersteller einzusenden, oder es erfolgt eine automatische Deaktivierung des Systems bis zur nächsten Kalibrierung.

Gemäß einer besonders bevorzugten Ausführungsform arbeitet der Schocksensor auch bei ausgeschaltetem Inhaltsstoffanalysesystem und wird intern durch eine Pufferbatterie oder Speicherkapazität mit elektrischer Energie versorgt. Auf diese Weise können auch außerhalb des Betriebs auftretende Schockereignisse, beispielsweise während des Transports aufgezeichnet werden. In dem Fall, dass mittels Schocksensor eine übermäßige Erschütterung erfasst wurde, wird bei Einschalten des Gerätes vorzugsweise eine Nutzerwarnung zur Überprüfung der Wellenlängenrichtigkeit ausgegeben.

Aus der Praxis ist es bekannt, dass Kalibrationen nur in einem gewissen Vertrauensbereich plausible Messwerte liefern. Aus diesem Grund hat sich als vorteilhaft erwiesen, während der Messwertaufnahme die Messorttemperatur zu erfassen. Hierfür ist das Inhaltsstoffanalysesystem vorzugsweise mit Temperatursensoren ausgestattet. Es erfolgt ein Vergleich der durch die Temperatursensoren erfassten Temperaturen mit in Bezug zu dem ausgewählten Kalibrationsprodukt benannten Gültigkeitstemperaturwerten. Unzulässige Abweichungen von den vorgegebenen Gültigkeitstemperaturwerten werden mittels Anzeige- und Bedieneinheit signalisiert. Die erfassten Messort-Temperaturen werden vorzugsweise gemeinsam mit den Rohdaten des Spektrums gespeichert und stehen somit auch für spätere Auswertungen zur Verfügung. Die Gehäuseinnentemperatur des Inhaltsstoffanalysesystems wird vorzugsweise ebenfalls erfasst. Dies ist vorteilhaft, da die in Handheldgeräten verbauten NIR-Detektoren meist ungekühlt bzw. nicht temperaturstabilisiert sind. Temperaturänderungen verändern somit das Dunkelrauschen des Detektors. Dieser mögliche Einfluss auf das Messergebnis wird somit erfasst und dem Nutzer entsprechend signalisiert oder automatisch von der Steuereinheit berücksichtigt. Es wird vorzugsweise eine neue interne Kalibrierung angefordert bzw. automatisch ausgelöst.

Weiterhin hat es sich als zweckmäßig erwiesen, während der Messwertaufnahme die relative Luftfeuchtigkeit in dem Gehäuse des Inhaltsstoffanalysesystems und an dem Messort zu erfassen. Hierzu ist vorzugsweise jeweils ein Feuchtesensor innerhalb des Gehäuses und an dem Messort angeordnet. Die Erfassung der relativen Luftfeuchtigkeit in dem Gehäuse dient vorrangig dem Geräteschutz. Durch Erfassen der relativen Luftfeuchte am Messort kann beispielsweise erkannt werden, ob in der Umgebung Dampf vorliegt und entsprechende Messwertkorrekturen vorzunehmen sind. Auf diese Weise können durch die Luftfeuchtigkeit verursachte Messfehler minimiert werden. Weiterhin können Sensoren für eine Luftdruckmessung und eine Abstandsmessung eingesetzt werden, wobei für die Abstandsmessung zur Probe bereits bekannte Verfahren, wie z. B. Ultraschallmessung, Lichtlaufzeitmessung oder optische Abstandsmessung, genutzt werden können.

Mit dem Verfahren kann ein probenrichtiges Messen bei mobilen Inhaltsstoffanalysesystemen sichergestellt werden, da die üblichen Fehlerquellen durch entsprechende Gegenmaßnahmen eliminiert bzw. zumindest minimiert werden können.

Das erfindungsgemäße Datenverarbeitungsprogramm umfasst Programmcodemittel zur Ausführung des beschriebenen Verfahrens in der elektronischen Steuereinheit des mobilen Inhaltsstoffanalysesystems.

Bevorzugte Ausführungsformen der Erfindung werden nachfolgend anhand der beigefügten Figuren näher erläutert. Es zeigen:
- Fig. 1:: einen Programmablaufplan eines erfindungsgemäßen Verfahrens;
- Fig. 2:: die Fortsetzung des Programmablaufplans gemäß Fig. 1.

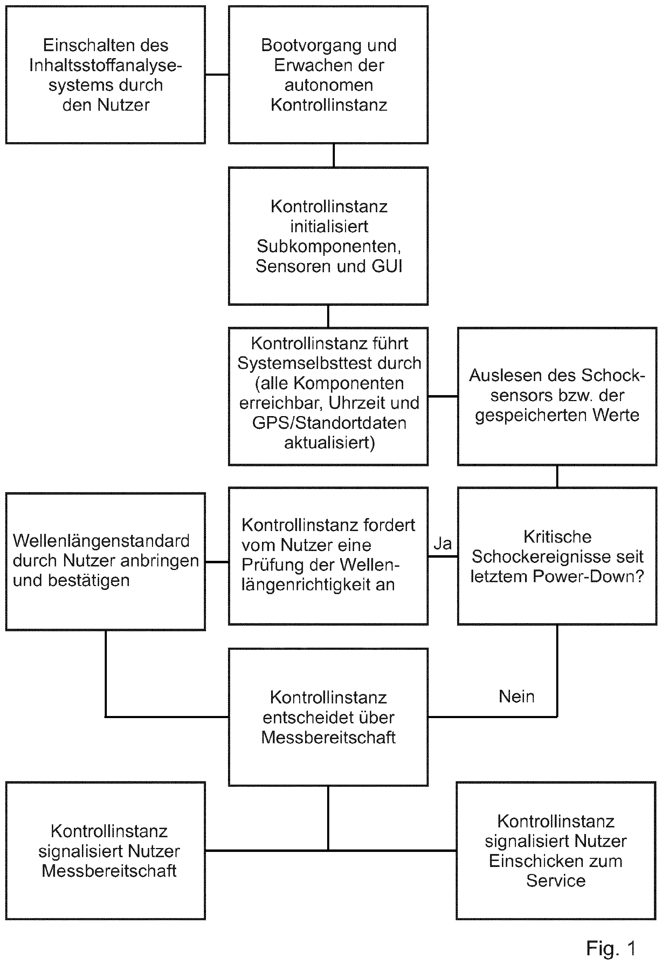

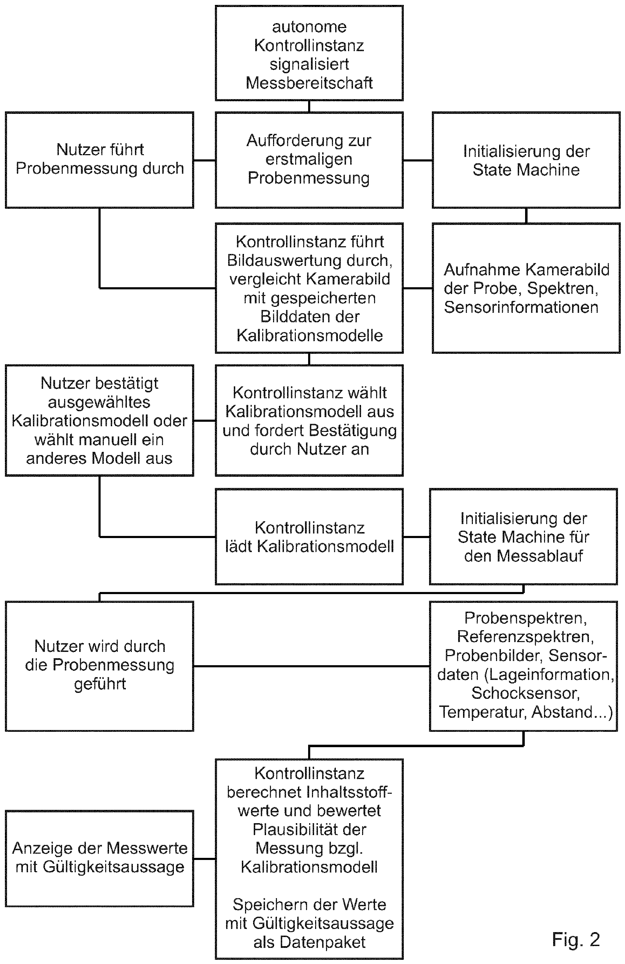

Die Figuren 1 und 2 zeigen gemeinsam einen zusammengehörigen Programmablaufplan eines erfindungsgemäßen Verfahrens, welches ein mobiles Inhaltsstoffanalysesystem steuert. Das Inhaltsstoffanalysesystem, welches zur Ausführung des Verfahrens ausgebildet ist, umfasst ein Gehäuse mit einem Fenster. Innerhalb des Gehäuses sind eine Lichtquelle, ein optisches Spektrometer, eine Kamera, eine interne Referenzeinheit zur Referenzierung und eine elektronische Rechen- oder Steuereinheit angeordnet. Die Komponenten werden durch die Steuereinheit gesteuert. Die Steuereinheit fungiert als autonome Kontrollinstanz und überwacht die Abläufe. Ein Bestandteil der Steuereinheit ist eine Zustandsmaschine (State Machine), welche die spektroskopischen Messungen, die Inhaltsstoffermittlung und die Plausibilitätsprüfung ausführt. Das Inhaltsstoffanalysesystem beinhaltet weiterhin eine Anzeige- und Bedieneinheit zur Interaktion mit einem Nutzer, welche bevorzugt als grafische Bedienoberfläche (GUI-Graphical User Interface) ausgebildet ist. Des Weiteren umfasst das System bevorzugt mehrere Sensoren zum Erfassen verschiedener Betriebsparameter, beispielsweise einen Lagesensor, einen Schocksensor, einen Temperatursensor oder einen Feuchtigkeitssensor.

Nachfolgend werden die während des Verfahrens ablaufenden Prozesse anhand der Figuren 1 und 2 beschrieben. In einem ersten Schritt wird das Inhaltsstoffanalysesystem durch den Nutzer eingeschaltet. Es erfolgt ein Bootvorgang. Die autonome Kontrollinstanz startet und initialisiert die Subkomponenten, die Sensoren und die Anzeige- und Bedieneinheit (GUI). Die Kontrollinstanz führt einen Systemselbsttest durch, in welchem überprüft wird, ob alle Komponenten erreichbar sind, und ob die im System vorliegende Uhrzeit und die GPS/Standortdaten aktuell sind. Die von dem Schocksensor erfassten Daten werden geprüft. Falls die Überprüfung ergibt, dass seit der letzten Nutzung ein kritisches Schockereignis stattfand, fordert die Kontrollinstanz vom Nutzer automatisch eine Prüfung der Wellenlängenrichtigkeit an. Der Nutzer bringt einen externen Wellenlängenstandard an und bestätigt dieses Vorgehen. Es erfolgt eine Prüfung gegen den Wellenlängenstandard mittels gespeicherter Referenzwerte. Werden Abweichungen festgestellt, die einen Vertrauensbereich überschreiten, wird durch die Kontrollinstanz entschieden, dass keine Messbereitschaft vorliegt. Dem Nutzer wird signalisiert, dass Servicearbeiten durchzuführen sind. In dem Fall, dass kein kritisches Schockereignis detektiert wurde, wird von der Kontrollinstanz sofort entschieden, ob das Inhaltsstoffanalysesystem messbereit ist. Bei Vorliegen der Messbereitschaft (fortgesetzter Verfahrensablauf siehe Fig.2) wird der Nutzer aufgefordert, erstmalig eine Probenmessung durchzuführen. Die Zustandsmaschine (State Machine) wird initialisiert und veranlasst die Aufnahme eines Kamerabildes der Probe, der Spektren und der Sensorinformationen. Die Kontrollinstanz führt nachfolgend eine Bildauswertung durch, indem sie das von der Probe aufgenommene Kamerabild mit in einem Speicher der Steuereinheit abgelegten Bilddaten von Kalibrationsmodellen vergleicht. Im Ergebnis dieses Vergleichs wird von der Kontrollinstanz automatisch das passende Kalibrationsmodell ausgewählt. Der Nutzer wird aufgefordert, das gewählte Kalibrationsmodell zu bestätigen. Er hat jedoch auch die Möglichkeit manuell ein anderes Kalibrationsmodell auszuwählen. Nachfolgend lädt die Kontrollinstanz das von dem Nutzer gewählte oder das automatisch gewählte Kalibrationsmodell. Die Zustandsmaschine (State Machine) wird für den Messablauf initialisiert. Der Nutzer wird durch die Probenmessung geführt. Die erfassten Messwerte werden durch die Steuereinheit verarbeitet. Probenspektren, Referenzspektren, Probenbilder und Sensordaten werden aufgenommen und verarbeitet. Die Kontrollinstanz berechnet die Inhaltsstoffwerte und bewertet die Plausibilität der Messung bezüglich des gewählten Kalibrationsmodells. Die Inhaltsstoffwerte werden zusammen mit einer Gültigkeitsaussage als Datenpaket abgespeichert. Abschließend erfolgt eine Ausgabe der Messwerte mit zugehöriger Gültigkeitsaussage auf der Anzeige- und Bedieneinheit oder einem Drucker.

## Patentansprüche

1. Verfahren zur probenrichtigen Messung mit einem mobilen Inhaltsstoffanalysesystem, welches ein Gehäuse mit einem Fenster, eine Schnittstelle für eine externe Referenzeinheit und eine Anzeige- und Bedieneinheit aufweist, wobei in dem Gehäuse eine Lichtquelle, ein optisches Spektrometer, eine Kamera, eine interne Referenzeinheit und eine elektronische Steuereinheit angeordnet sind, wobei das Verfahren folgende Schritte umfasst:
- Auswahl eines zu einer zu untersuchenden Probe passenden Kalibrationsproduktes, bei welchem es sich um ein in einem Speicher der elektronischen Steuereinheit hinterlegtes Mess- und Auswerteregime handelt, welches anhand eines ebenfalls in dem Speicher hinterlegten Kalibrationsmodells und weiterer in dem Speicher enthaltener Abläufe zur probenrichtigen Messwertaufnahme aus mit dem Spektrometer erfassten Reflexionsspektren einen oder mehrere Inhaltsstoffe der zu untersuchenden Probe berechnet;
- Plausibilitätsprüfung des gewählten Kalibrationsproduktes, wobei, falls das gewählte Kalibrationsprodukt innerhalb vorbestimmter Toleranzbereiche nicht zu der Probe passt, eine fehlerhafte Auswahl signalisiert wird und eine erneute Auswahl eines alternativen Kalibrationsproduktes initiiert wird, wobei für die Plausibilitätsprüfung des gewählten Kalibrationsproduktes von der Kamera aufgenommene Bilder der Probe mit in einem Speicher der Steuereinheit für das ausgewählte Kalibrationsprodukt abgelegten Vergleichsbildern verglichen werden;
- Ausgabe von einzuhaltenden Messbedingungen, die zumindest den zu wählenden Messpunkt und die Messdauer umfassen, in Abhängigkeit vom ausgewählten Kalibrationsprodukt;
- Erfassen von Messwerten an der Probe mithilfe des Spektrometers unter den Messbedingungen und unter gleichzeitiger Überwachung der Messbedingungen;
- Verarbeitung der erfassten Messwerte durch die elektronische Steuereinheit, wobei jeder Messwert als gültig erklärt wird, der unter Einhaltung der Messbedingungen erfasst wurde;
- Ausgabe mindestens der für gültig befundenen Messwerte an die Anzeige- und Bedieneinheit und/oder ein anderes Ausgabe- oder Speicherelement.

2. Verfahren nach Anspruch 1, wobei vor der Aufnahme der Messwerte eine interne Kalibrierung des Inhaltsstoffanalysesystems mit Hilfe der internen Referenzeinheit erfolgt.

3. Verfahren nach Anspruch 1 oder 2, wobei während des Erfassens der Messwerte die Ausrichtung des Inhaltsstoffanalysesystems in Bezug zu dem Messort erfasst und überwacht wird.

4. Verfahren nach einem der Ansprüche 1 bis 3, wobei Erschütterungen des Inhaltsstoffanalysesystems zumindest während der Messwertaufnahme erfasst und überwacht werden.

5. Verfahren nach einem der Ansprüche 1 bis 4, wobei während der Messwertaufnahme die Temperatur und die relative Luftfeuchte am Messort und im Gehäuseinneren erfasst und überwacht werden, wobei unzulässige Abweichungen von durch das Kalibrationsprodukt vorgegebenen Temperaturwerten und relativen Luftfeuchten mittels Anzeige- und Bedieneinheit signalisiert werden.

6. Verfahren nach einem der Ansprüche 1 bis 5, wobei dem Nutzer während der Messwertaufnahme durch optische und/oder akustische Signale signalisiert wird, ob die Messbedingungen eingehalten sind.

7. Verfahren nach einem der Ansprüche 1 bis 6, wobei bei einem negativen Ergebnis der Plausibilitätsprüfung des gewählten Kalibrationsproduktes automatisch ein anderes Kalibrationsprodukt gewählt wird, welches wiederum einer Plausibilitätsprüfung unterzogen wird.

8. Mobiles Inhaltsstoffanalysesystem umfassend
- ein Gehäuse;
- eine in dem Gehäuse angeordnete Lichtquelle;
- ein in einer Wand des Gehäuses angeordnetes Fenster, durch welches Licht von der Lichtquelle in Richtung einer Probe ausgestrahlt wird;
- ein in dem Gehäuse angeordnetes optisches Spektrometer mit einem dispersiven Element und mehreren Spektralsensoren, welches das von der Probe reflektierte Licht erfassen kann;
- eine in dem Gehäuse angeordnete interne Referenzeinheit;
- eine in dem Gehäuse angeordnete Kamera, deren Einfallsöffnung durch das Fenster in Richtung einer zu untersuchenden Probe gerichtet ist;
- eine in dem Gehäuse angeordnete elektronische Steuereinheit;
- eine Anzeige- und Bedieneinheit zur Interaktion mit einem Nutzer;
- eine Schnittstelle für den Anschluss an eine externe Referenzeinheit;
wobei die Steuereinheit zur Durchführung eines Verfahrens nach einem der Ansprüche 1 bis 7 konfiguriert ist.

9. Mobiles Inhaltsstoffanalysesystem nach Anspruch 8, wobei es weiterhin mindestens einen der nachfolgend aufgelisteten Sensoren umfasst:
- einen Lagesensor zum Erfassen der Ausrichtung des Inhaltsstoffanalysesystems;
- einen Schocksensor zum Erfassen von Erschütterungen des Inhaltsstoffanalysesystems;
- einen Temperatursensor zum Erfassen der MessortTemperatur;
- einen Temperatursensor zum Erfassen der Gehäuseinnentemperatur;
- einen Feuchtigkeitssensor zum Erfassen der relativen Luftfeuchtigkeit am Messort und im Gehäuseinneren.

10. Datenverarbeitungsprogramm mit Programmcodemitteln zur Ausführung eines Verfahrens nach einem der Ansprüche 1 bis 7 in einer elektronischen Steuereinheit eines mobilen Inhaltsstoffanalysesystems nach Anspruch 8 oder 9.

## Claims

1. Method for sample-appropriate measurement using a mobile constituent analysis system comprising a housing with a window, an interface for an external reference unit and a display and operating unit, wherein a light source, an optical spectrometer, a camera, an internal reference unit and an electronic control unit are arranged in the housing, wherein the method comprises the following steps:
- selecting a calibration product suitable for a sample to be examined, the said calibration product being a measurement and evaluation regime stored in a memory of the electronic control unit, the said measurement and evaluation regime calculating one or more constituents of the sample to be examined from reflection spectra captured by means of the spectrometer on the basis of a calibration model, likewise stored in the memory, and further processes for recording measurement values in sample-appropriate fashion contained in the memory;
- checking the plausibility of the chosen calibration product, wherein, if the chosen calibration product does not fit to the sample within predetermined tolerance ranges, an incorrect selection is signalled and a renewed selection of an alternative calibration product is initiated, wherein, for the plausibility check of the chosen calibration product, images of the sample taken by the camera are compared with comparison images stored in a memory of the control unit for the selected calibration product;
- outputting measurement conditions to be observed, which comprise at least the measurement point to be chosen and the measurement duration, depending on the selected calibration product;
- capturing measurement values at the sample using the spectrometer under the measurement conditions and whilst simultaneously monitoring the measurement conditions;
- processing the captured measurement values by the electronic control unit, wherein each measurement value that has been captured in compliance with the measurement conditions is declared valid;
- outputting at least the measurement values found to be valid to the display and operating unit and/or another output or storage element.

2. Method according to Claim 1, wherein an internal calibration of the constituent analysis system is carried out with the aid of the internal reference unit prior to the recording of the measurement values.

3. Method according to Claim 1 or 2, wherein the alignment of the constituent analysis system in relation to the measurement location is captured and monitored during the capture of the measurement values.

4. Method according to any one of Claims 1 to 3, wherein vibrations of the constituent analysis system are captured and monitored, at least while the measurement values are being recorded.

5. Method according to any one of Claims 1 to 4, wherein the temperature and the relative humidity at the measurement location and in the interior of the housing are captured and monitored while the measurement values are being recorded, with impermissible deviations from temperature values and relative humidities specified by the calibration product being signalled by means of a display and operating unit.

6. Method according to any one of Claims 1 to 5, wherein whether the measurement conditions are met while the measurement values are being recorded is signalled to the user by optical and/or acoustic signals.

7. Method according to any one of Claims 1 to 6, wherein another calibration product is chosen automatically in the event of a negative result of the plausibility check of the chosen calibration product, the said other calibration product, in turn, being subjected to a plausibility check.

8. Mobile constituent analysis system, comprising
- a housing;
- a light source disposed in the housing;
- a window disposed in a wall of the housing, light being emitted from the light source in the direction of a sample through the said window;
- an optical spectrometer disposed in the housing, comprising a dispersive element and a plurality of spectral sensors and being able to detect the light reflected by the sample;
- an internal reference unit disposed in the housing;
- a camera disposed in the housing, the incidence opening of which is directed through the window in the direction of a sample to be examined;
- an electronic control unit disposed in the housing;
- a display and operating unit for interaction with a user;
- an interface for connection to an external reference unit;
wherein the control unit is configured to carry out a method according to any one of Claims 1 to 7.

9. Mobile constituent analysis system according to Claim 8, wherein it furthermore comprises at least one of the sensors listed below:
- a relative position sensor for capturing the alignment of the constituent analysis system;
- a shock sensor for capturing vibrations in the constituent analysis system;
- a temperature sensor for capturing the measurement location temperature;
- a temperature sensor for capturing the internal housing temperature;
- a humidity sensor for capturing the relative humidity at the measurement location and inside the housing.

10. Data processing program comprising program code means for carrying out a method according to any one of Claims 1 to 7 in an electronic control unit of a mobile constituent analysis system according to Claim 8 or 9.

## Revendications

1. Procédé de mesure exacte à l'échantillon avec un système d'analyse d'ingrédients mobile, lequel possède un boîtier comprenant une fenêtre, une interface pour une unité de référence externe et une unité d'affichage et de conduite, une source de lumière, un spectromètre optique, une caméra, une unité de référence interne et une unité de commande électronique étant disposés dans le boîtier, le procédé comprenant les étapes suivantes :
- sélection d'un produit d'étalonnage adapté à un échantillon à analyser, ledit produit d'étalonnage étant un régime de mesure et d'interprétation stocké dans une mémoire de l'unité de commande électronique, lequel calcule, à l'aide d'un modèle d'étalonnage également stocké dans la mémoire et d'opérations supplémentaires servant à l'enregistrement de valeurs mesurées exactes à l'échantillon stockées dans la mémoire et à partir de spectres de réflexion acquis avec le spectromètre, un ou plusieurs ingrédients de l'échantillon à analyser ;
- contrôle de plausibilité du produit d'étalonnage sélectionné, une sélection erronée étant signalée et une nouvelle sélection d'un produit d'étalonnage alternatif étant initiée dans le cas où le produit d'étalonnage sélectionné n'est pas adapté à l'échantillon à l'intérieur d'une plage de tolérance prédéterminée, le contrôle de plausibilité du produit d'étalonnage sélectionné s'effectuant en comparant des images enregistrées par la caméra de l'échantillon avec des images comparatives stockées dans une mémoire de l'unité de commande pour le produit d'étalonnage sélectionné ;
- délivrance en sortie de conditions de mesure à respecter, lesquelles comprennent au moins le point de mesure à sélectionner ainsi que la durée de mesure, en fonction du produit d'étalonnage sélectionné ;
- acquisition de valeurs mesurées au niveau de l'échantillon à l'aide du spectromètre dans les conditions de mesure et en surveillant en même temps les conditions de mesure ;
- traitement des valeurs mesurées acquises par l'unité de commande électronique, chaque valeur mesurée qui a été acquise en respectant les conditions de mesure étant déclarée valide ;
- délivrance d'au moins les valeurs mesurées constatées valides à l'unité d'affichage et de conduite et/ou à un autre élément de délivrance ou de mémorisation.

2. Procédé selon la revendication 1, un étalonnage interne du système d'analyse d'ingrédients étant effectué à l'aide de l'unité de référence interne avant l'enregistrement des valeurs mesurées.

3. Procédé selon la revendication 1 ou 2, l'orientation du système d'analyse d'ingrédients par rapport au lieu de mesure étant détectée et surveillée pendant l'acquisition des valeurs mesurées.

4. Procédé selon l'une des revendications 1 à 3, les secousses du système d'analyse d'ingrédients étant détectées et surveillées au moins pendant l'enregistrement des valeurs mesurées.

5. Procédé selon l'une des revendications 1 à 4, la température et l'humidité relative au point de mesure et à l'intérieur du boîtier étant acquises et surveillées pendant l'enregistrement des valeurs mesurées, les écarts non autorisés par rapport aux valeurs de température et aux humidités relatives prédéfinies par le produit d'étalonnage étant signalés au moyen de l'unité d'affichage et de conduite.

6. Procédé selon l'une des revendications 1 à 5, l'utilisateur se faisant signaler, pendant l'enregistrement des valeurs mesurées par des signaux visuels et/ou sonores, si les conditions de mesure sont respectées.

7. Procédé selon l'une des revendications 1 à 6, un résultat négatif du contrôle du produit d'étalonnage sélectionné entraînant automatiquement la sélection d'un autre produit d'étalonnage, lequel est à son tour soumis à un contrôle de plausibilité.

8. Système d'analyse d'ingrédients mobile, comprenant
- un boîtier ;
- une source de lumière disposée dans le boîtier ;
- une fenêtre disposée dans une paroi du boîtier, à travers laquelle de la lumière provenant de la source de lumière est émise en direction d'un échantillon ;
- un spectromètre optique disposé dans le boîtier et comprenant un élément dispersif et plusieurs capteurs spectraux, lesquels peuvent détecter la lumière réfléchie par l'échantillon ;
- une unité de référence interne disposée dans le boîtier ;
- une caméra disposée dans le boîtier, dont l'ouverture d'incidence à travers la fenêtre est orientée en direction d'un échantillon à analyser ;
- une unité de commande électronique disposée dans le boîtier ;
- une unité d'affichage et de conduite servant à l'interaction avec un utilisateur ;
- une interface pour le raccordement à une unité de référence externe ;
l'unité de commande étant configurée pour mettre en oeuvre un procédé selon l'une des revendications 1 à 7.

9. Système d'analyse d'ingrédients mobile selon la revendication 8, comprenant en outre au moins l'un des capteurs énumérés ci-après :
- un capteur de position destiné à détecter l'orientation du système d'analyse d'ingrédients ;
- un détecteur de chocs destiné à détecter des secousses du système d'analyse d'ingrédients ;
- un capteur de température destiné à acquérir la température du point de mesure ;
- un capteur de température destiné à acquérir la température intérieure du boîtier ;
- un capteur d'humidité destiné à acquérir l'humidité relative au point de mesure et à l'intérieur du boîtier.

10. Programme de traitement de données comprenant des moyens de code de programme destinés à mettre en oeuvre un procédé selon l'une des revendications 1 à 7 dans une unité de commande électronique d'un système d'analyse d'ingrédients mobile selon la revendication 8 ou 9.
